# EUROPEAN PATENT APPLICATION

(11) **EP 4 749 786 A1**
(43) Date of publication of application: **27.05.2026**
(21) Application number: 25218192.0
(22) Date of filing: 25.11.2025
(51) Int. Cl.: H01M 50/204, H01M 50/271, H01M 50/342, H01M 50/367

(54) **BATTERY EXPLOSION-PROOF ASSEMBLY AND BATTERY PACK**

(30) Priority: 26.11.2024 CN 202422898953 U; 17.06.2025 WO PCT/CN2025/101331
(71) Applicant: Eve Energy Co., Ltd., Huizhou, Guangdong 516006 (CN)
(72) Inventor: ZHANG, Weijin, Zhongkai High-tech Zone, Huizhou, 516006 (CN)
(74) Representative: Herrero & Asociados, S.L.

(57) **Abstract**

A battery explosion-proof assembly and a battery pack are provided. In the battery explosion-proof assembly, a cover (10) is configured to cover a battery case (40) and defining a through hole (130) capable of being communicated to an outside of the battery case (40). A burst membrane (20) is arranged to cover the through hole (130) and configured to expose the through hole (130) in an event of thermal runaway in the battery case (40), thereby releasing pressure from the battery case (40) through the through hole (130). A flow guiding assembly (30) is arranged on the cover (10), and is in communication with the through hole (130). The flow guiding assembly (30) is configured to guide the gas generated by thermal runaway to the through hole (130) during the thermal runaway in the battery case (40).

## Description

### TECHNICAL FIELD

The invention relates to the technical technology of batteries, and in particular to a battery explosion-proof assembly and a battery pack.

### BACKGROUND

When a battery undergoes thermal runaway, a large amount of electrical energy and chemical energy stored in the battery is rapidly released in a short time, causing an internal temperature of the battery to rise quickly. Meanwhile, decomposition of electrolyte and active materials generates a large volume of gas, resulting in a sharp increase in internal pressure, potentially leading to battery explosion. To ensure battery safety, an explosion-proof valve is typically mounted on a battery case to promptly release the internal pressure of the battery when the internal pressure in the battery becomes too high, thereby preventing the battery explosion during the thermal runaway.

Currently, battery packs commonly use contact pin burst-type or spring piston-type explosion-proof valves. However, existing explosion-proof valves have complex structures and poor pressure relief performance.

### SUMMARY

**A** battery explosion-proof assembly and a battery pack are provided in the invention.

**In** a first aspect, the battery explosion-proof assembly includes a cover, a burst membrane, and a flow guiding assembly. The cover is configured to cover a battery case and defining a through hole capable of being communicated to an outside of the battery case. The burst membrane is arranged to cover the through hole and configured to expose the through hole in an event of thermal runaway in the battery case, such that pressure in the battery case is capable of being released through the through hole. The flow guiding assembly is arranged on the cover, communicated with the through hole, and configured to guide a gas generated during the thermal runaway in the battery case to the through hole.

The cover includes a first mounting portion arranged to surround the through hole. The burst membrane includes a second mounting portion. The second mounting portion is arranged on the first mounting portion, and the through hole is sealed by the burst membrane.

**The** burst membrane further includes a burst portion. The burst portion is arranged in the second mounting portion, and an area of the burst portion is less than or equal to an area of the second mounting portion.

The cover includes a top panel and an extension panel adjacent to the top panel. A predetermined angle is defined between the top panel and the extension panel. The through hole is defined in the extension panel, and the flow guiding assembly is arranged on the top panel.

The flow guiding assembly includes a collection section and at least one flow guiding section. A first end of the collection section is in communication with the at least one of flow guiding section, and a second end of the collection section is in communication with the through hole.

**A** size of the second end of the collection section is less than or equal to a size of the first end of the collection section.

The collection section includes a first plate and a second plate, and the at least one flow guiding section includes a third plate and a fourth plate. The first plate and the second plate are spaced apart from each other, and the third plate and the fourth plate are spaced apart from each other.

**A** distance between the first plate and the second plate is less than or equal to a distance between the third plate and the fourth plate.

The burst membrane is arranged on the cover and covers the through hole by means of bonding or welding.

**In** a second aspect, the invention provides a battery pack. The battery pack includes a cell group, a battery case, and the battery explosion-proof assembly as described in the first aspect. The cell group is arranged in the battery case, and the battery explosion-proof assembly is arranged on the battery case.

**One** of the technical solutions described above offers the following advantages and beneficial effects.

The battery explosion-proof assembly described above includes a cover, a burst membrane, and a flow guiding assembly. The through hole is formed in the cover. The cover is configured to cover the battery case, and the through hole is capable of being communicated to the outside of the battery case. The burst membrane is arranged to cover the through hole and is configured to expose the through hole during the thermal runaway of the battery case, thereby releasing the pressure in the battery case through the through hole. The flow guiding assembly is arranged on the cover, communicated to the through hole, and is configured to guide the gas produced during the thermal runaway toward the through hole, enabling rapid venting during the thermal runaway. In the invention, need for explosion-proof valve components is eliminated by directly covering the through hole with the burst membrane. When the thermal runaway occurs in the battery pack, a high pressure generated by the thermal runaway bursts the burst membrane, opening the through hole and allowing the through hole to vent pressure from the battery case, achieving pressure relief of the battery pack via burst, thereby simplifying the explosion-proof structure, making the burst membrane easy to mount, and reducing costs. Additionally, the flow guiding assembly that communicates to the through hole helps direct the gas generated by the thermal runaway quickly to the through hole, thereby improving the efficiency and effectiveness of pressure relief during the thermal runaway of the battery pack.

### BRIEF DESCRIPTION OF THE DRAWINGS

**FIG.** 1 is a structural view of a battery explosion-proof assembly according to some embodiments of the invention from a first perspective.
FIG. 2 is a structural view of the battery explosion-proof assembly according to some embodiments of the invention from a second perspective.
FIG. 3 is structural view of the battery explosion-proof assembly according to some embodiments of the invention from a third perspective.
FIG. 4 is a partially exploded view of the battery explosion-proof assembly according to some embodiments of the invention.
FIG. 5 is a first exploded view of a battery pack according to some embodiments of the invention.
FIG. 6 is a second exploded view of the battery pack according to some embodiments of the invention.
FIG. 7 is a structural view of the battery pack according to some embodiments of the invention.

### Reference numerals in the drawing:

10-cover; 110-top panel; 120-extension panel; 130-through hole; 140-first mounting portion; 20-burst membrane; 210-second mounting portion; 220-burst portion; 30-flow guiding assembly; 320-collection section; 322-first plate; 324-second plate; 330-flow guiding section; 332-third plate; 334-fourth plate; 40-battery case; 50-cell group.

### DETAILED DESCRIPTION

**To** enable those skilled in the art to better understand the invention scheme, the technical solutions in the examples of the invention will be clearly and completely described below in conjunction with the accompanying drawings. It is obvious that the described examples are only part of the examples of the invention, and not all of them. Based on the examples in the invention, all other examples obtained by those of ordinary skill in the art without creative efforts shall fall within the scope of protection of the invention.

It should be noted that the terms "first", "second", etc., in the specification, claims, and the drawings of the invention are used to distinguish similar objects, and are not necessarily intended to describe a specific sequence or order. It should be understood that such usage can be interchanged under appropriate circumstances, so that the examples of the invention described herein can be implemented accordingly. Furthermore, the terms "comprise", "include", and any of their variants are intended to cover a non-exclusive inclusion, such that a process, method, system, product, or apparatus that includes a series of elements is not limited to only those elements explicitly listed, but may also include other elements not explicitly listed or inherent to such processes, methods, products, or apparatuses.

**In** the invention, directional or positional terms such as "upper", "lower", "left", "right", "front", "rear", "top", "bottom", "inner", "outer", "middle", "vertical", "horizontal", "transverse", "longitudinal", etc., refer to directions or positions based on the orientation or position shown in the drawings. These terms are primarily used to better describe the invention and its examples, and are not intended to limit the devices, elements, or components being referred to as having a specific orientation or being constructed and operated in a specific orientation.

Moreover, some of the aforementioned terms, in addition to indicating direction or position, may also carry other meanings. For example, the term "upper" may also imply a kind of attachment or connection in certain contexts. Those of ordinary skill in the art can understand the specific meanings of these terms in the invention based on the particular context.

**In** addition, the term "plurality" shall mean two or more.

**It** should also be noted that, where there is no conflict, the examples in the invention and the features within these examples may be combined with each other. The following will describe the invention in detail with reference to the accompanying drawings and in combination with the examples.

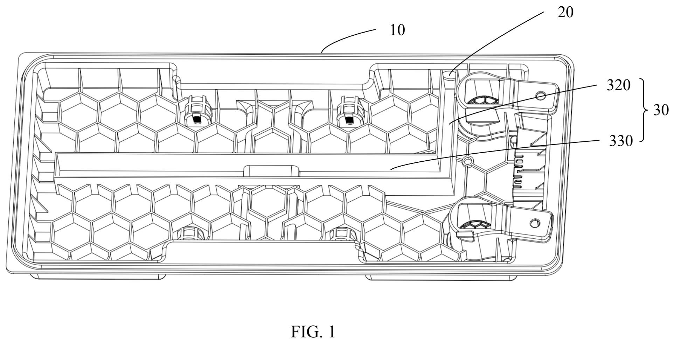

**In** some examples, as shown in FIGS. 1, 5, and 6, a battery explosion-proof assembly is provided. The battery explosion-proof assembly includes a cover 10, a burst membrane 20, and a flow guiding assembly 30. The cover 10 is configured to cover the battery case 40 and defines a through hole 130. The through hole 130 is capable of being communicated to an outside of the battery case 40. The burst membrane 20 covers the through hole 130 and is configured, in an event of thermal runaway in the battery case 40, to expose the through hole 130, thereby allowing communication between the through hole 130 and the outside of the battery case 40 to relive pressure in the battery case 40. The flow guiding assembly 30 is arranged on the cover 10 and is in communication with the through hole 130. Specifically, a space defined by the flow guiding assembly 30 is communicated with the through hole 130. The flow guiding assembly 30 is configured to guide a gas produced during the thermal runaway in the battery case 40 to the through hole 130.

The battery explosion-proof assembly can be applied to a battery pack, which may include a battery case 40. A cell group 50 is arranged in the battery case 40. The cell group 50 may be consisted of a single cell or at least two cells connected with each other in series and/or parallel. The cell may be a lithium-ion cell of various shapes, such as prismatic or cylindrical. The battery case 40 may be rectangular in shape and have a receiving cavity and an opening. The receiving cavity is communicated with the opening. The cell group 50 is arranged in the receiving cavity, and the cover 10 covers the opening of the battery case 40 to seal the receiving cavity, thereby securing the cell group 50 in place. For example, the cover 10 may be attached to the battery case 40 at the opening by means of screwing, snapping, and/or bonding.

The cover 10 may be made of either metallic or non-metallic material. For example, the cover 10 can be a plastic cover or an aluminum cover with an insulating layer on a surface. The through hole 130 may be formed in an inner wall of the cover 10 and may be communicated with the outside of the battery case 40. The through hole 130 is used to rapidly vent the gas produced during the thermal runaway in the battery case 40, thereby quickly relieving the pressure in the battery case 40 and preventing explosion of the battery case 40. For example, the through hole 130 may be circular in shape, but it is not limiting. It is worth noting that a size of the through hole 130 may be determined based on a specific model and dimension of the battery pack.

The burst membrane 20 has a thin-film structure and may be a protective membrane with breathable and waterproof/dustproof (IP67) properties. Under normal operation of the battery pack, the burst membrane 20 can balance an internal pressure and external pressure of the battery case 40 to prevent abnormal pressure in the battery case 40. The burst membrane 20 can be arranged to cover and seal the through hole 130, preventing dust or external liquid from entering the battery case 40 through the through hole 130 when there is no thermal runaway in the battery case 40, providing a waterproof and dustproof effect for the battery pack. The burst membrane 20 has a burst pressure threshold. When pressure exerted on the burst membrane 20 reaches the burst pressure threshold, the burst membrane 20 bursts, opening the through hole 130 and enabling the through hole 130 to be communicated with the outside of the battery case 40, thereby allowing the through hole 130 to vent pressure from the battery case 40.

**By** covering the through hole 130 in the cover 10 with the burst membrane 20, when the thermal runaway occurs in the battery case 40, the high pressure produced by the thermal runaway may burst the burst membrane 20, thereby opening the through hole 130 and allowing the gas in the battery base 40 to be released quickly through the through hole 130. In this way, need for complex explosion-proof valve components is eliminated, simplifying the battery explosion-proof assembly and reducing costs.

The flow guiding assembly 30 is mounted on the inner wall of the cover 10. In one example, the cover 10 and the flow guiding assembly 30 may be integrally formed as a one-piece structure. The cover 10 and the flow guiding assembly 30 cooperatively define a flow guiding channel that communicates the through hole 130 with the receiving cavity of the battery case 40. The flow guiding channel is configured to guide the gas generated during thermal runaway quickly to the through hole 130, so that the gas from the thermal runaway can be rapidly exhausted to the outside through the through hole 130, achieving rapid pressure relief for the battery case 40. In another example, the flowing guiding channel may be defined solely by the flow guiding assembly 30, and the flow guiding assembly 30 can be mounted to the inner wall of the cover 10 by welding or other means.

When the thermal runaway occurs in the battery case 40, the gas generated by the thermal runaway moves toward the cover 10, causing a portion of the gas to enter the flow guiding assembly 30. The flow guiding assembly 30 then rapidly directs the portion of the gas to the through hole 130, causing the gas from the thermal runaway to accumulate at the through hole 130. When the pressure at the through hole 30 reaches the burst pressure threshold of the burst membrane 20, the gas breaks through the burst membrane 20, opening the through hole 130. Then the gas is vent rapidly from the battery case 40 through the through hole 130, thereby improving pressure relief efficiency of the battery pack.

**In** the above examples, the through hole 130 is formed in the cover 10. The cover 10 is configured to cover the battery case 40, and the through hole 130 is capable of being communicated to the outside of the battery case 40. The burst membrane 20 is arranged to cover the through hole 130 and is configured to expose the through hole 130 during the thermal runaway of the battery case 40, thereby releasing the pressure in the battery case 40 through the through hole 130. The flow guiding assembly 30 is arranged on the cover 10, communicated to the through hole 130, and is configured to guide the gas produced during the thermal runaway toward the through hole 130, enabling rapid venting during the thermal runaway. In the invention, the need for explosion-proof valve components is eliminated by directly covering the through hole 130 with the burst membrane 20. When the thermal runaway occurs in the battery pack, a high pressure generated by the thermal runaway bursts the burst membrane 20, opening the through hole 130 and allowing the through hole 130 to vent pressure from the battery case 40, achieving pressure relief of the battery pack via burst, thereby simplifying the explosion-proof structure, making the burst membrane 20 easy to mount, and reducing costs. Additionally, the flow guiding assembly 30 that communicates to the through hole 130 helps direct the gas generated by the thermal runaway quickly to the through hole 130, thereby improving the efficiency and effectiveness of pressure relief during the thermal runaway of the battery pack.

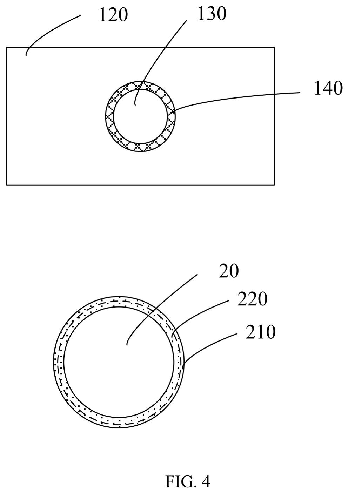

**In** some examples, as shown in FIG. 4, the cover 10 includes a first mounting portion 140 arranged to surround the through hole 130. The burst membrane 20 includes a second mounting portion 210. The second mounting portion 210 is arranged on the first mounting portion 140 to seal the through hole 130.

The first mounting portion 140 may be in a shape of a hollow ring and is arranged around a periphery of the through hole 130. For example, the first mounting portion 140 may be connected to an edge of the cover 10 defining the through hole 130. Alternatively, the first mounting portion 140 may be spaced apart from the edge of the cover 10 defining the through hole 130. A width of the first mounting portion 140 can be determined based on mounting requirements and burst pressure of the burst membrane 20.

The second mounting portion 210 may also be annular and located adjacent to a periphery of the burst membrane 20. The second mounting portion 210 is configured to be mounted to the first mounting portion 140. For example, a shape of the second mounting portion 210 may be consistent with a shape of the first mounting portion 140, and a size of the second mounting portion 210 may be consistent with a size of the first mounting portion 140. Adhesive elements or welding elements may be pre-arranged on either the first mounting portion 140 or the second mounting portion 210 to secure the second mounting portion 210 to the first mounting portion 140 by adhesion or welding, thereby achieving the mounting of the burst membrane 20 and sealing the through hole 130 by the burst membrane 20. Alternatively, an area of the first mounting portion 140 is larger than an area of the second mounting portion 210, and thus adhesive or welding elements may be pre-arranged on the first mounting portion 140 to facilitate to bond or weld the second mounting portion 210 to the first mounting portion 140, thereby enhancing ease of mounting of the burst membrane 20.

**By** arranging the second mounting portion 210 of the burst membrane 20 to the first mounting portion 140 of the cover 10, the dust or external liquid can be effectively prevented from entering the battery case 40 through the through hole 130 under normal operating conditions of the battery pack, providing dustproof and waterproof protection. In the event of thermal runaway in the battery case 40, the gas generated by the thermal runaway is guided by the flow guiding assembly 30 rapidly to the through hole 130. When the pressure at the through hole 130 reaches the burst pressure threshold of the burst membrane 20, the gas breaks through the burst membrane 20, causing the second mounting portion 210 of the burst membrane 20 to detach from the first mounting portion 140 of the cover 10, thereby opening the through hole 130 and allowing the gas generated during the thermal runaway to be discharged from the battery case 40 through the through hole 130, improving the pressure relief efficiency of the battery pack.

**In** some examples, the burst membrane 20 further includes a burst portion 220. The burst portion 220 is located in the second mounting portion 210. An area of the burst portion 220 is less than or equal to the area of the second mounting portion 210.

**A** burst pressure that the burst portion 220 can withstand is less than a burst pressure that other portion of the burst membrane 20 can withstand. The burst portion 220 is positioned in the second mounting portion 210. For example, the area of the burst portion 220 area is equal to the area of the second mounting portion 210, that is, the second mounting portion 210 serves as the burst portion 220. When the thermal runaway occurs in the battery case 40, the generated gas is rapidly directed to the through hole 130 through the flow guiding assembly 30. Once the pressure at the through hole 130 reaches the burst pressure threshold, a connection between the second mounting portion 210 and the first mounting portion 140 bursts, causing the second mounting portion 210 of the burst membrane 20 to detach from the first mounting portion 140 of the cover 10, thereby opening the through hole 130. In this way, the gas generated by the thermal runaway can be rapidly exhausted to the outside from the battery case 40, thereby improving the efficiency of battery pressure relief.

**In** another example, the area of the burst portion 220 is less than the area of the second mounting portion 210 but greater than half of the area of the second mounting portion 210. The second mounting portion 210 can be divided into a first region and a second region. The first region corresponds to the burst portion 220, and the second region corresponds to the other portion of the burst membrane 20 the burst portion 220. The adhesive or welding elements arranged in the first region are thinner than the adhesive or welding elements arranged in the second region, resulting in a burst pressure of the first region less than a burst pressure of the second region. When the pressure at the through hole 130 reaches the burst pressure threshold of the burst portion 220, burst occurs at a weld or adhesive line of the burst portion 220, detaching the second mounting portion 210 of the burst membrane 20 from the first mounting portion 140 of the cover 10, opening the through hole 130, and rapidly venting the gas generated during the thermal runaway out of the battery case 40 through the through hole 130, thus improving the pressure relief efficiency of the battery pack.

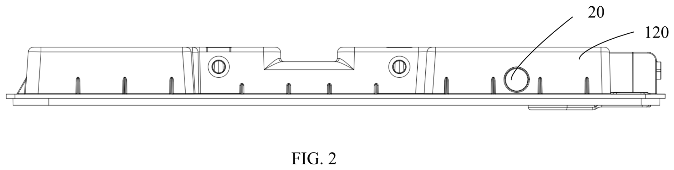

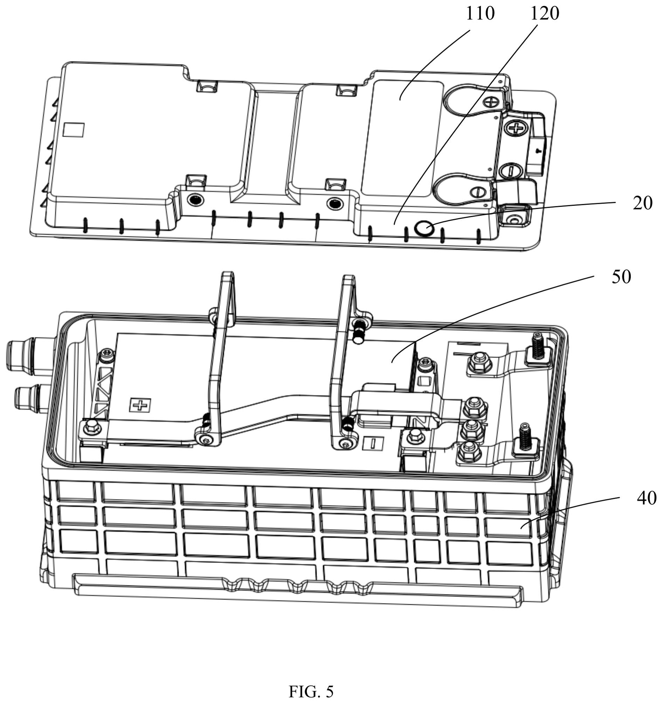

**In** some examples, as shown in FIGS. 2 and 5, the cover 10 includes a top panel 110 and an extension panel 120 adjacent to the top panel 110. A predetermined angle is defined between the top panel 110 and the extension panel 120. The through hole 130 is formed in the extension panel 120. The flow guiding assembly 30 is arranged on the top panel 110.

**The** top panel 110 and the extension panel 120 are integrally formed as a one-piece structure. The predetermined angle between the top panel 110 and the extension panel 120 may be 90°. The top panel 110 has an outer top face and an inner top face. The outer top face and the inner top face are opposite each other. The outer top face is arranged with a positive post and a negative terminal post, as well as a handle. The flow guiding assembly 30 is arranged on the inner top face of the top panel 110. For example, several ribs may be arranged on the inner top face of the top panel 110 to enhance structural strength of the cover 10.

The extension panel 120 defines the through hole 130. The through hole 130 penetrates the extension panel 120 and is in communication with the flow guiding assembly 30. By covering the through hole 130 with the burst membrane 20, when the thermal runaway occurs in the battery case 40, the gas generated by the thermal runaway gathers toward the top panel 110 of the cover 10 and is guided by the flow guiding assembly 30 rapidly to the through hole 130. When the pressure at the through hole 130 reaches the burst pressure threshold, the high pressure generated by the thermal runaway breaks through the burst membrane 20, causing the through hole 130 to open. As a result, the pressure can be released from the battery case 40 through the through hole 130, achieving pressure relief via burst and eliminating the need for the explosion-proof valve components, simplifying the explosion-proof structure of the battery pack, allowing for easier mounting of the burst membrane 20, and reducing cost.

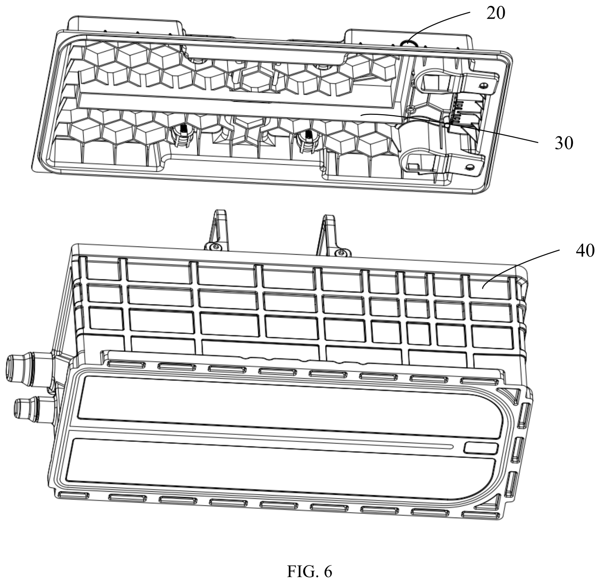

**In** some examples, as shown in FIGS. 1 and 6, the flow guiding assembly 30 includes a collection section 320 and at least one flow guiding section 330. A first end of the collection section 320 is in communication with the at least one flow guiding section 330, and a second end of the collection section 320 is in communication with the through hole 130.

The collection section 320 and the at least one flow guiding section 330 are integrally formed as a one-piece structure. The at least one flow guiding section 330 forms a preset angle with the collection section 320. For example, a preset angle between a corresponding flow guiding section 330 and the collection section 320 can be 90°.

The flow guiding section 330 is configured to guide the gas generated by thermal runaway in the battery case 40 toward the collection section 320. The collection section 320 is configured to gather the gas and guide the gas to the through hole 130, allowing the gas produced by thermal runaway to quickly reach the through hole 130. When the pressure at the through hole 130 reaches the burst pressure threshold, the burst membrane 20 is broken rapidly, thereby achieving rapid pressure relief of the battery case 40.

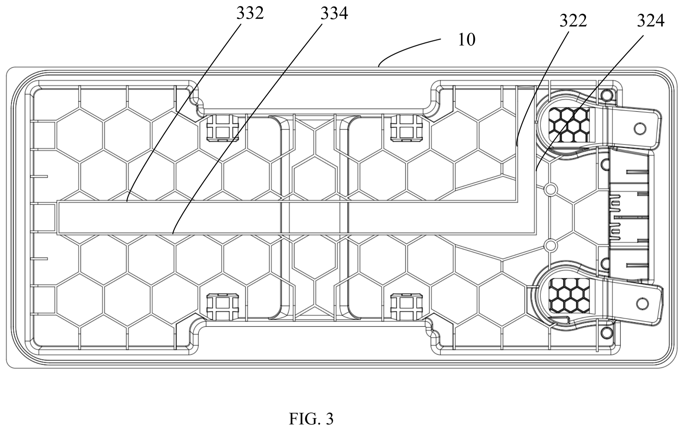

**In** some examples, as shown in FIG. 3, a size of the second end of the collection section 320 is smaller than or equal to a size of the first end of the collection section 320.

For example, the collection section 320 and the cover 10 cooperatively form a collection channel. By configuring the size of the second end of the collection section 320 to be smaller than the size of the first end, an opening of the collection channel gradually narrows from the first end toward the second end, facilitating transmission of the gathered gas generated during the thermal runaway through the collection channel to the through hole 130, thereby enhancing both the transmission efficiency of the gas generated during the thermal runaway and pressure relief effect.

**In** some examples, as shown in FIG. 3, the collection section 320 includes a first plate 322 and a second plate 324. The at least one flow guiding section 330 includes a third plate 332 and a fourth plate 334. The first plate 322 and second plate 324 are spaced apart from each other, and the third plate 332 and fourth plate 334 are spaced apart from each other.

**The** first plate 322 may be perpendicular to the top panel 110 of the cover 10, and the second plate 324 may also be perpendicular to the top panel 110 of the cover 10. For example, an angle between the first plate 322 and the top panel 110 of the cover 10 is an acute angle, while an angle between the second plate 324 and the top panel 110 is an obtuse angle, and thus the first plate 322, second plate 324, and the top panel 110 cooperatively form a trumpet-shaped collection channel. Similarly, the third plate 332 may be perpendicular to the top panel 110, and the fourth plate 334 may also be perpendicular to the top panel 110. For example, an acute angle is defined between the third plate 332 and the top panel 110, and an obtuse angle is defined between the fourth plate 334 and the top panel 110, and thus the third plate 332, fourth plate 334, and the top panel 110 cooperatively form a trumpet-shaped sub-guiding channel.

Based on the collection channel defined by the first plate 322, second plate 324, and the top panel 110 and the sub-guiding channel defined by the third plate 332, the fourth plate 334, and the top panel 110, when the thermal runaway occurs in the battery case 40, the gas generated by thermal runaway moves toward the cover 10. Part of the gas generated by thermal runaway enters the sub-guiding channel and is conveyed through the sub-guiding channel to the collection channel. The collection and transmission through the collection channel allows the gas to be rapidly directed to and gathered at the through hole 130. Once the pressure at the through hole 130 reaches the burst pressure threshold of the burst membrane 20, the gas breaks through the burst membrane 20, causing the through hole 130 to be exposed and enabling the gas generated by thermal runaway to be rapidly discharged out of the battery case 40 through the through hole 130, thereby improving the pressure relief efficiency.

**In** some examples, as shown in FIG. 3, a distance between the first plate 322 and the second plate 324 is less than or equal to a distance between the third plate 332 and the fourth plate 334.

For example, the first plate 322 and the second plate 324 are spaced apart from each other, and the third plate 332 and the fourth plate 334 are spaced apart from each other. The distance between the first plate 322 and the second plate 324 is less than the distance between the third plate 332 and the fourth plate 334, thereby making a flow channel space of the collection channel smaller than a flow channel space of the sub-guiding channel. This arrangement allows the sub-guiding channel to direct and transfer the gas generated by thermal runaway to the collecting channel. The collection by the collecting channel enables the rapid guiding of a portion of the gas generated during the thermal runaway to the through hole 130, allowing the gas to quickly reach the through hole 130. When the gas pressure at the through hole 130 reaches the burst pressure threshold of the burst membrane 20, the gas generated during the thermal runaway can rapidly burst the burst membrane 20, thereby improving the pressure relief efficiency of the battery pack.

**In** some examples, the burst membrane 20 is arranged on the cover 10 and covers the through hole 130 by means of bonding or welding.

For example, the burst membrane 20 can be bonded to cover the through hole 130. An adhesive can be applied at a mounting site between the burst membrane 20 and the cover 10. The burst membrane 20 is placed at the mounting site, and the adhesive is heated to secure the burst membrane 20 in place on the cover 10, thereby sealing the through hole 130.

Alternatively, the burst membrane 20 may be welded to cover the through hole 130. The burst membrane 20 is positioned at the edge of the cover 10 defining the through hole 130, and then secured on the cover 10 in place by ultrasonic welding or thermal welding at an appropriate location, thereby sealing the through hole 130.

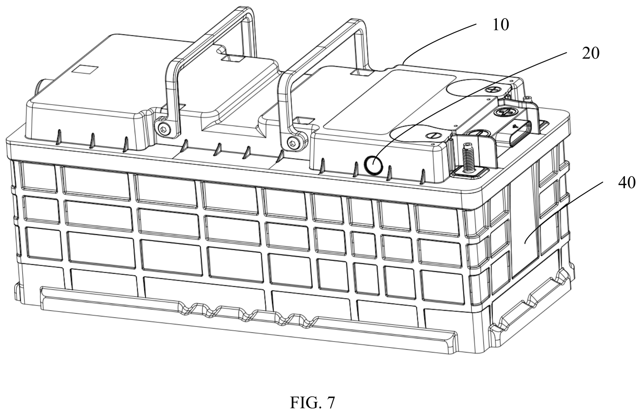

**In** some examples, as shown in FIGS. 5 to 7, a battery pack is further provided. The battery pack includes a cell group 50, a battery case 40, and a battery explosion-proof assembly described above. The cell group 50 is arranged in the battery case 40, and the explosion-proof structure is arranged on the battery case 40.

The detailed descriptions of the cell group 50, the battery case 40, and the explosion-proof structure can be found in the above examples, and will not be repeated here.

**In** the invention, the cell group 50 is arranged in the battery case 40, the explosion-proof structure includes the cover 10, burst membrane 20, and flow guiding assembly 30, the cover 10 defines the through hole 130 and is configured to cover the battery case 40, the burst membrane 20 covers the through hole 130 and is configured to expose the through hole 130 when the thermal runaway occurs in the battery case 40, thereby relieving pressure from the battery case 40 via the through hole 130, and the flow guiding assembly 30 is arranged on the cover 10 and is in communication with the through hole 130; the flow guiding assembly 30 is configured to guide the gas generated during the thermal runaway in the battery case 40 to the through hole 130, thus enabling rapid pressure relief during the thermal runaway of the battery pack.

**In** addition, in the above examples, by directly covering the through hole 130 with the burst membrane 20, the need for the explosion-proof valve components is eliminated. When the thermal runaway occurs in the battery pack, a high pressure generated by the thermal runaway bursts the burst membrane 20, opening the through hole 130 and allowing the through hole 130 to vent pressure from the battery case 40, achieving pressure relief for the battery pack via burst, thereby simplifying the explosion-proof structure, making the burst membrane 20 easy to mount, and reducing costs. Additionally, the flow guiding assembly 30 that communicates to the through hole 130 helps direct the gas generated by the thermal runaway quickly to the through hole 130, thereby improving the efficiency and effectiveness of pressure relief during the thermal runaway of the battery pack.

**It** should be noted that the battery pack may further include components such as a liquid cooling plate. Specifically, the battery pack may include more components than those described in the above examples, or it may combine certain components or have different component arrangements.

The technical features in the above examples can be arbitrarily combined. For the sake of brevity, not all possible combinations of the technical features in the above examples are described. However, as long as there is no conflict in such combinations, they shall all be regarded as falling within the scope described in this specification.

The above-described examples represent only several implementation methods of the invention. The descriptions are relatively specific and detailed, but should not be construed as limiting the scope of the utility model patent. It should be pointed out that for those skilled in the art, various modifications and improvements can be made without departing from the spirit of the invention, and these shall all fall within the scope of protection of the invention. Therefore, the scope of protection of the invention shall be subject to the claims attached hereto.

## Claims

1. A battery explosion-proof assembly, **characterized by** comprising:
a cover (10), configured to cover a battery case (40) and defining a through hole (130) capable of being communicated to an outside of the battery case (40);
a burst membrane (20), arranged to cover the through hole (130) and configured to expose the through hole (130) in an event of thermal runaway in the battery case (40), such that pressure in the battery case (40) is capable of being released through the through hole (130); and
a flow guiding assembly (30), arranged on the cover (10), communicated with the through hole (130), and configured to guide a gas generated during the thermal runaway in the battery case (40) to the through hole (130).

2. The battery explosion-proof assembly as claimed in claim 1, wherein the cover (10) comprises a first mounting portion (140) arranged to surround the through hole (130), and the burst membrane (20) comprises a second mounting portion (210);
the second mounting portion (210) is arranged on the first mounting portion (140), and the through hole (130) is sealed by the burst membrane (20).

3. The battery explosion-proof assembly as claimed in claim 2, wherein the burst membrane (20) further comprises a burst portion (220);
the burst portion (220) is arranged in the second mounting portion (210), and an area of the burst portion (220) is less than or equal to an area of the second mounting portion (210).

4. The battery explosion-proof assembly as claimed in any one of claims 1-3, wherein the cover (10) comprises a top panel (110) and an extension panel (120) adjacent to the top panel (110), and a predetermined angle is defined between the top panel (110) and the extension panel (120);
the through hole (130) is defined in the extension panel (120), and the flow guiding assembly (30) is arranged on the top panel (110).

5. The battery explosion-proof assembly as claimed in any one of claims 1-4, wherein the flow guiding assembly (30) comprises a collection section (320) and at least one flow guiding section (330), a first end of the collection section (320) is in communication with the at least one of flow guiding section (330), and a second end of the collection section (320) is in communication with the through hole (130).

6. The battery explosion-proof assembly as claimed in claim 5, wherein a size of the second end of the collection section (320) is less than or equal to a size of the first end of the collection section (320).

7. The battery explosion-proof assembly as claimed in any one of claims 5-6, wherein the collection section (320) comprises a first plate (322) and a second plate (324), and the at least one flow guiding section (330) comprises a third plate (332) and a fourth plate (334);
the first plate (322) and the second plate (324) are spaced apart from each other, and the third plate (332) and the fourth plate (334) are spaced apart from each other.

8. The battery explosion-proof assembly as claimed in claim 7, wherein a distance between the first plate (322) and the second plate (324) is less than or equal to a distance between the third plate (332) and the fourth plate (334).

9. The battery explosion-proof assembly as claimed in any one of claims 1-8, wherein the burst membrane (20) is arranged on the cover (10) and covers the through hole (130) by means of bonding or welding.

10. A battery pack, **characterized by** comprising a cell group (50), a battery case (40), and the battery explosion-proof assembly as claimed in any one of claims 1-9;
wherein the cell group (50) is arranged in the battery case (40), and the battery explosion-proof assembly is arranged on the battery case (40).
